Europäisches Patentamt

European Patent Office

Office européen des brevets

(11) Publication number: **0 378 244**
**A2**

## EUROPEAN PATENT APPLICATION

(21) Application number: **90100744.3**

(22) Date of filing: **15.01.90**

(51) Int. Cl.⁵: **F16H 59/10, F16H 61/22, B60K 41/26**

(30) Priority: **13.01.89 JP 6493/89**
**31.03.89 JP 80851/89**

(43) Date of publication of application:
**18.07.90 Bulletin 90/29**

(84) Designated Contracting States:
**DE GB**

(71) Applicant: **NISSAN MOTOR CO., LTD.**
**No.2, Takara-cho, Kanagawa-ku**
**Yokohama-shi Kanagawa-ken 221(JP)**

Applicant: **FUJI KIKO COMPANY LIMITED**
**1-13, Nihonbashihon-cho 3-chome Chuo-Ku**
**Tokyo(JP)**

Applicant: **OHI SEISAKUSHO CO., LTD.**
**14-7, Maruyama 1-chome Isogo-ku**

**Yokohama-shi Kanagawa-ken 235(JP)**

(72) Inventor: **Kobayashi, Satoshi**
**Lion's Mansion 13-19, Nakahara 1-chome**
**Hiratsuka-shi, Kanagawa-ken(JP)**
Inventor: **Saito, Motohiro, c/o Fuji Kiko**
**Company, Limited**
**Washizu-Plant, 2028, Washizu**
**Kosai-shi, Shizuoka-ken(JP)**
Inventor: **Yamazaki, Hiroshi**
**28-3, Maruyama 1-chome, Isogo-ku**
**Yokohama-shi, Kanagawa-ken(JP)**

(74) Representative: **Patentanwälte Grünecker,**
**Kinkeldey, Stockmair & Partner**
**Maximilianstrasse 58**
**D-8000 München 22(DE)**

(54) Structure of control device for vehicular automatic transmission.

(57) A structure of an A/T (automatic transmission) control device for a vehicular transmission is disclosed in which when the shift lever for controlling the A/T is pivoted at a position at which a positioning pin is engaged with a parking range P, a solenoid pin pushed and rotates a rotary bush supported on a peripheral surface of a rotary bush by means of a force of a spring within the solenoid so that a recessed groove of the rotary bush is deviated from a position of the positioning pin. Therefore, even if control button (installed at an upper end of the shift lever) is operated, the positioning pin interferes with the upper plane of the rotary bush and is not lowered any more. Consequently, no deviation from the range P occurs. Next, when a vehicular ignition switch is turned to ON and foot brake is operated, the solenoid is turned to ON. The solenoid pin pulls and rotates the rotary bush against the spring force of the spring installed within the solenoid so that the position of the recessed groove of the rotary bush becomes the same as the position of the positioning pin. When the control button is operated, the positioning pin is moved out of the P range. Thus, it becomes possible to move the shift lever at any one of the ranges other than the P range. The solenoid is again turned to OFF a constant period of time after the solenoid is turned to ON with the foot brake is depressed.

FIG.1

## STRUCTURE OF CONTROL DEVICE FOR VEHICULAR AUTOMATIC TRANSMISSION

### BACKGROUND OF THE INVENTION

#### (1) Field of the invention

The present invention relates generally to a structure of an automatic transmission (hereinafter referred to as an A/T) used in an automotive vehicle.

The present invention, particularly, relates to the structure of an A/T control device used in the vehicle in which when an ignition switch is turned to ON in a parking range (hereinafter referred to as a P range), a lever of the transmission cannot be shifted to any other shift range unless a foot brake is operated.

#### (2) Description of the background art

A Japanese Utility Model Application First Publication Showa 60-185750 published on December 9, 1985 exemplifies an A/T control device used for an automotive vehicle.

Since, in the A/T control device disclosed in the above-identified Japanese Utility Model Application First Publication, a solenoid pin of a solenoid receives an input force when a vehicular driver operates the shift lever to be shifted at any one of the A/T shift ranges in a shift lock state, the solenoid pin is deformed and becomes inoperable.

If rigidities of the shift lever and solenoid are increased to prevent such a deformation of the solenoid, the whole solenoid is large-sized.

Consequently, the cost of manufacturing the A/T control device is accordingly increased. The whole weight of the A/T control device is increased as well.

Furthermore, an unfavorable lay-out structure of the A/T becomes established.

### SUMMARY OF THE INVENTION

It is an object of the present invention to provide a cost-reduced, small-sized, and light-weight structure of the A/T control device for the automative vehicle in which a force preventing a motion of a position pin is against only a force pushing a control button and a time for which the solenoid receives a power is shortened.

The above-described object can be achieved by providing a structure of an A/T control device for a vehicular transmission, comprising: a) a shift lever pivotally supported on a vehicle body for the control over the A/T; and b) a position plate mounted on the vehicle body so as to restrict shift range positions of the shift lever: the shift lever including: c) a positioning pin which is engageable at respective shift range positions of the position plate and is biased upward so as to be restricted at the respective shift range positions; d) control means for moving the positioning pin downward so that the engagement from the position plate is released; e) a rotary bush rotatably supported on the peripheral surface of the shift lever having the recessed groove which makes the upward and downward movement of the positioning pin possible only at a position thereof which coincides with the positioning pin and upper plate which blocks the movement of the positioning pin when the recessed groove is present at the position which does not align with the positioning pin; and f) solenoid which pivots the rotary bush so that the recessed groove of the rotary bush aligns with the pisitioning pin when energized and which pivots the rotary bush so that the recessed groove of the rotary bush does not align with the positioning pin when deenergized.

The above-described object can also be achieved by providing a structure of an A/T control device for a vehicular transmission, comprising: a) a shift lever pivotally supported on a vehicle body for the control over the A/T; b) a position plate mounted on the vehicle body so as to restrict shift range positions of the shift lever: c) first means which is engageable at respective shift range positions of the position plate and is biased upward so as to be restricted at the respective shift range positions; d) second means for moving the positioning pin downward so that the engagement of the first means from the position plate is released; e) third means, rotatably supported on the peripheral surface of the shift lever, having a first member for making the upward and downward movement of the positioning pin possible only at a position thereof which coincides with the positioning pin and a second member for blocking the movement of the positioning pin when the first member is present at the position which does not align with the positioning pin; and f) a solenoid member for pivoting the rotary bush so that the first member of the third means aligns with the pisitioning pin when energized and for pivoting the third means so that the first member of the third means does not align with the positioning pin when deenergized, the solenoid member being deenergized for a predetermined time after an ignition switch of the vehicle is turned to ON and vehicular brake mechanism is operated.

BRIEF DESCRIPTION OF THE DRAWINGS

Fig. 1 is an elevational view of an A/T control device in a first preferred embodiment according to the present invention.

Fig. 2 is a cross sectional view of the A/T control device shown in Fig. 1 cut away along the line Y - Y.

Fig. 3 is a perspective view from a line X 1 of Fig. 1.

Fig. 4 is a perspective view from a line X 2 of Fig. 1.

Fig. 5 is a perspective view from a line X 3 of Fig. 1.

Fig. 6 is a circuit wiring diagram of the A/T control device.

Fig. 7 is a cross sectional view of an essential part of the A/T control device cut away along the line I - I of Fig. 10 in a second preferred embodiment according to the present invention.

Fig. 8 is an essential cross sectional view for explaining a state after the shift lever is moved from a position except P range to the P range.

Fig. 9 is a perspective view of an essential part of the shift lever shown in Fig. 7.

Fig. 10 is a side partially cross sectional view of the A/T control device in the second preferred embodiment.

DETAILED DESCRIPTION OF THE PREFERRED EMBODIMENTS

Reference will hereinafter be made to the drawings in order to facilitate a better understanding of the present invention.

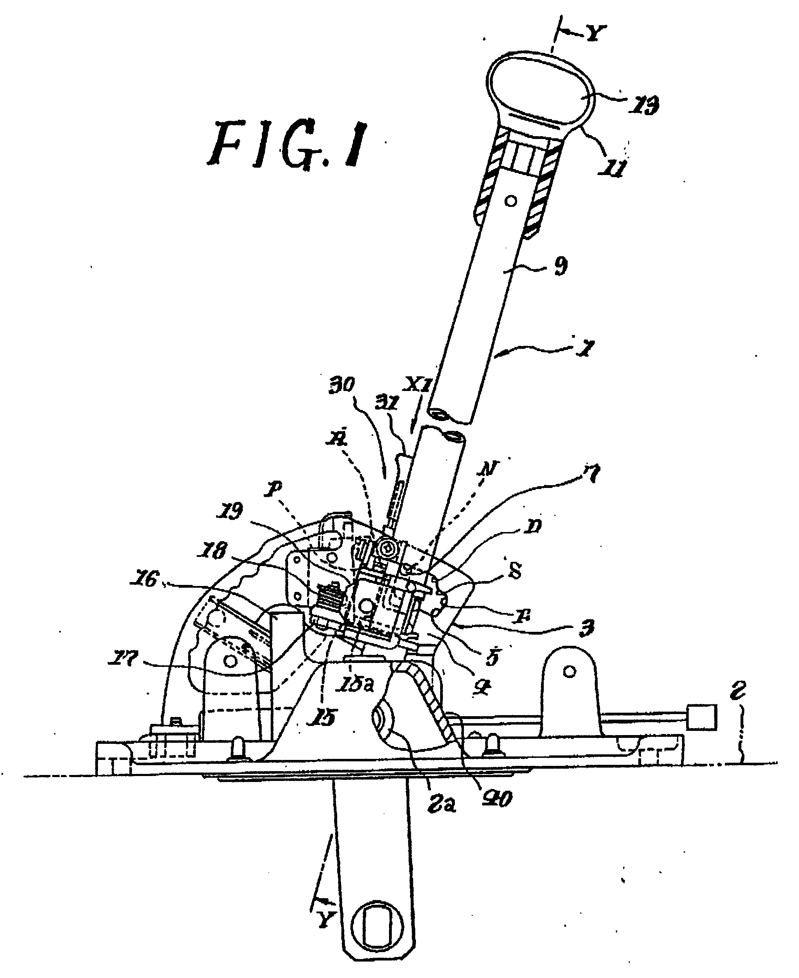

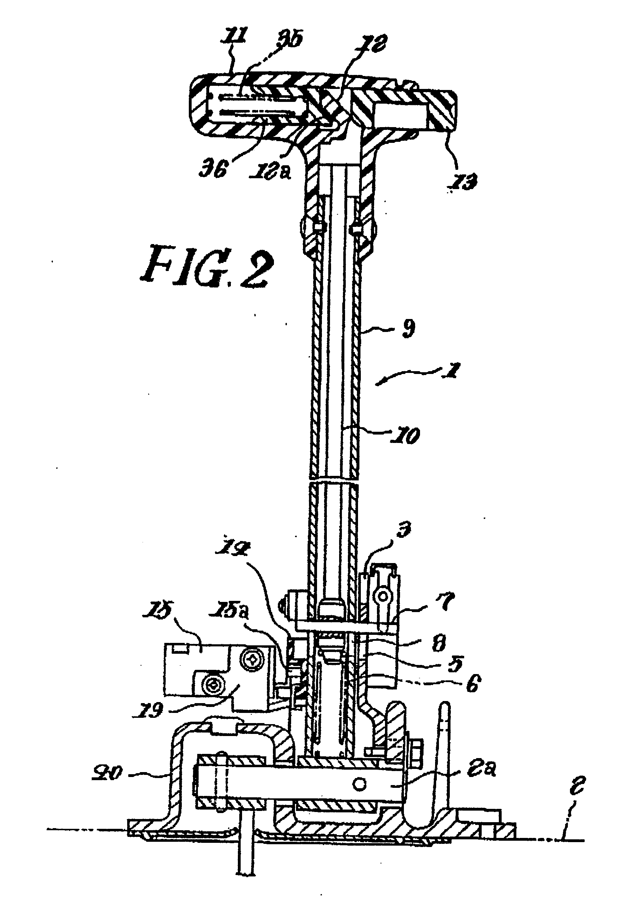

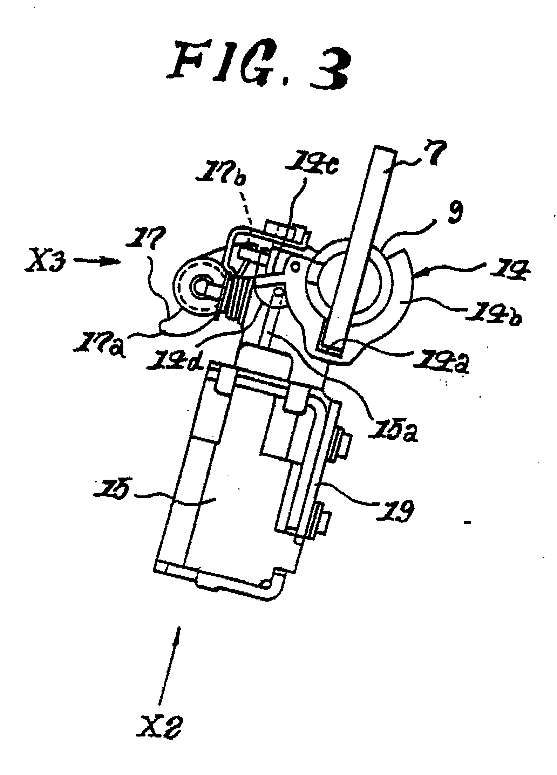

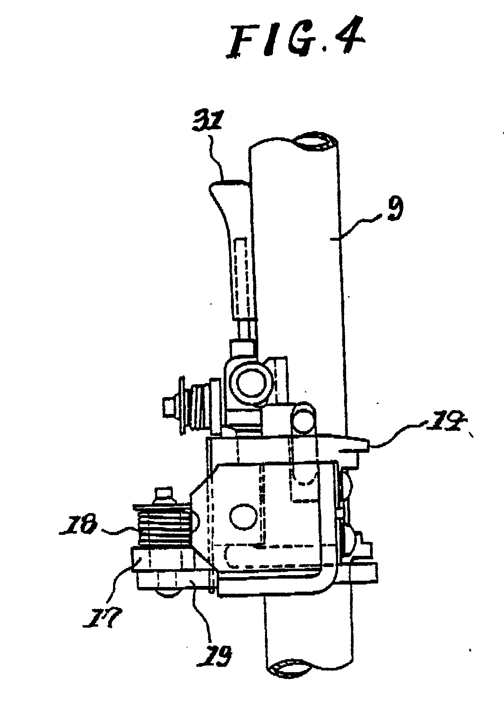

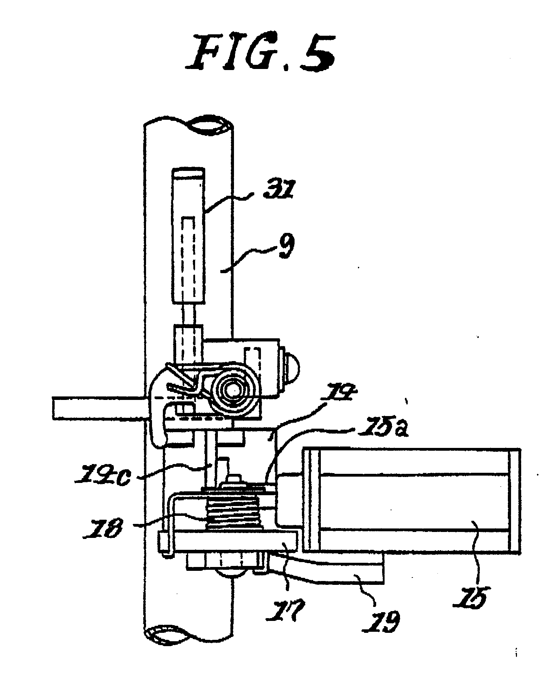

Figs. 1 through 6 show a first preferred embodiment of an A/T control device according to the present invention.

A shift lever 1 for controlling an A/T is supported so as to enable a pivotal movement thereof with an axle 2a axially supported on a plate 40 as a center. The plate 40 is fixed on a vehicle body 2 of a floor panel.

A symbol 3 is a position plate formed so as to restrict a shift position of the A/T including a parking range P of the shift lever 1 and vertically installed on the vehicle body 2.

The position plate 3 is formed in a letter L shape of cross section, a substantially horizontal plane thereof being disposed on the vehicle body 2. An engagement opening 5 is formed and vertically extended on a rising plane 4 disposed on the vehicle body 2. The engagement opening 5 is formed with grooves P, R, N, D, S, and F having the above-described P range P, reverse range R, neutral range N, D range D, two-speed range S, and first-speed range F.

The above-described shift lever 1 includes a position pin 7 biased so as to move upward by means of a return spring 6 engageable at the respective shift ranges P, R, N, D, S, and F of the position plate 3 and so as to be restricted at their respective shift range positions.

The shift lever 1 includes a hollow lever main body 9 formed so as to have an elongated hole 8 and allowed to move the position pin 7 in the upward and downward movements.

The shift lever 1 includes the rod 10 supported so as to enable upward and downward movement of the position pin 7 within the lever main body 9 and supporting the position pin 7 at its lower end thereof.

The shift lever 1 includes a control button 13 installed within a knob 11 supported on an upper end of the lever main body 9, movable in a substantially horizontal direction, a left end thereof being contacted with a taper portion 12 of an upper end of the above-described rod 10, and which moves the position pin 7 downward so as to release the engagement of the position pin 7 from the position plate 3 via the rod 10.

The shift lever 1 includes a rotary bush 14 formed with a recessed groove 14a and upper plane 14b. The recessed groove 14a enables the upward and downward movements of the position pin 7 when it is placed only at a position which aligns with the position pin 7.

At a position of the recessed groove 14a which does not align with the position pin 7, the upper plate 14b prevents the movements of the position pin 7. The rotary bush 14 is supported so as to enable rotation on a peripheral surface of the lever main body 9 of the shift lever 1.

The shift lever 1 includes a solenoid 15. A solenoid pin 15a thereof is linked to a plate 14d. The plate 14d is extended from a rib 14c of the rotary bush 14. The power is supplied to the solenoid 15 only when a foot brake (not shown) is operated so that the rotary bush 14 can be pivoted, thus the recessed groove 14a of the rotary bush 14 matching with the position pin 7.

The shift lever 1 includes a parking lock lever 17. The parking lock lever 17 is provided with a tongue portion 17a. The tongue portion 17a which biases a rib 14c of the rotary bush 14 so that a position of the recessed groove 14a of the rotary bush 14 matches with the position of the position pin 7 with a force of a spring 18 stronger than a spring (not shown) housed in the inside of the solenoid 15.

Another tongue portion 17b interferes with a stopper 16 fixed on the vehicle body 2 when the shift lever 1 is shifted to the P range P. Thus, the tongue portion 17a is separated from the rib 14c of the rotary bush 14. Consequently, the spring force of the solenoid 15 causes the position of the recessed groove 14a of the rotary bush 14 to be deviated from the position of the position pin 7.

A parking rock lever 17 is supported so that another tonge portion 17b interferes with a stopper 16 fixed on the vehicle body 2 when the shift lever 1 is shifted at the P range P so that the tongue portion 17a is separated from the rib 14c of the rotary bush 14. Consequently, a spring force of the solenoid 15 causes the position of the recessed groove 14a of the rotary bush 14 to be deviated from the position of the position pin 7.

Both solenoid pin 15a and parking rock lever 17 are positioned so as to be in the same horizontal line with the rib 14c of the rotary bush 14 sandwiched.

A bracket 19 is supported on the lever main body 9. Both solenoid 15 and parking rock lever 17 are supported on the lever main body 9. A manual release device 30 is installed along the lever main body 9. When a lever 31 of the manual release device 30 is pushed downward with the solenoid 15 failed, the position of the recessed groove 14a of the rotary bush 14 can be matched with the position of the position pin 7 against the spring force of the solenoid pin 15a. In addition, a spring 35 is installed within a knob 11 so that a taper portion 12 of the rod 10 is biased in a direction from which a control button 13 is projected.

A bush member 36 is installed between the taper portion 12 and spring 35 so as to be engaged with the recessed groove 12a of the taper portion 12.

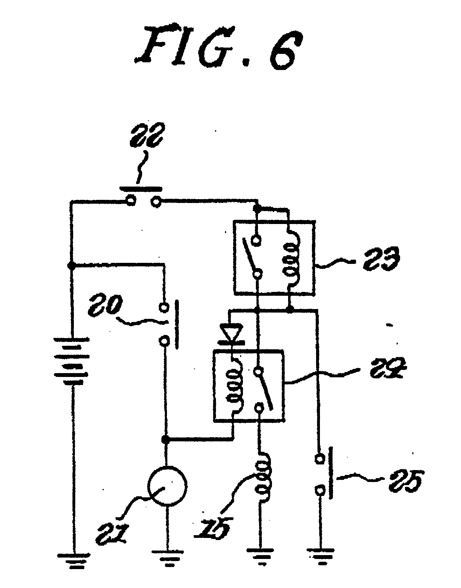

Fig. 6 shows a circuit wiring diagram of the A/T control device described above.

When the foot brake is operated, a stop switch 20 is turned on and a stop lamp 21 is illuminated which is installed at a downstream of the stop lamp 21. Relays 23 and 24 and parking range sensor 25 are installed at the downstream of an ignition switch 22.

An operation of the above-described A/T control device in the first preferred embodiment will be described in details.

When a driver operates the shift lever 1 so as to pivot the lever 1 until the position pin 7 is engaged with the P range P, the tongue portion 17a of the parking lock lever 17 interferes with the stopper 16.

When the other tongue portion 17b of the lever 17 is separated from the rotary bush 14, the biasing force applied to the rotary bush 14 is eliminated.

Then, the spring installed within the inside of the solenoid 15 causes the rib 14c of the rotary bush 14 to be pushed.

The rotary bush 14 is, then, rotated so that the position of the recessed groove 14a is deviated from the position of the position pin 7.

Therefore, even if the control button 13 is operated, the position pin 7 interferes with the upper plane 14b of the rotary bush 14 and does not drop any more. The position pin 7 is lifted by means of the return spring 6, so that no deviation of the position pin 7 from the P range P occurs.

With the foot brake operated before the start of the vehicle, the stop switch 20 is turned to ON. Thus, with the solenoid 20 turned to ON, the solenoid pin 15a of the solenoid 15 pulls the rotary bush 14 against the spring force installed in the inside of the solenoid 15 to rotate the rotary bush 14.

The position of the recessed groove 14a of the rotary bush 14 becomes the same as the position of the position pin 7. When the control button 13 is operated, the position pin 7 is moved so as to be deviated from the range P of the position plate 3 via the recessed groove 14a.

Consequently, the shift lever 1 can be moved to any one of the ranges R, N, S, and F other than the D range. When a constant time is passed, the solenoid 15 is turned to OFF so that no burden is imposed on the solenoid 15.

Hence, after the solenoid 15 is turned to ON with the foot brake operated, a constant time is passed with the shift lever 1 held at the P range P. The solenoid 15 is again turned to OFF. If the foot brake is again operated, the solenoid 15 will not be turned to ON.

In addition, after the shift lever 1 is rotated at the range R, N, D, S, and F except the P range P and the solenoid 15 is turned to OFF, the rotary bush 14 is rotated by means of the pressure of the parking lock lever 17 having the biasing force stronger than the force of the spring within the solenoid 15 so that the position of the recessed groove 14a coincides with the position of the position pin 7.

As described above, since when the shift lever 1 is pivoted until the position pin 7 is engaged with the P range P, the position at which the spring installed within the solenoid causes the solenoid pin 15a to be pushed against the rib 14c of the rotary bush 14 has the substantially same height as a position at which the rib 14c of the rotary bush 14 is pushed by means of the pressure of the parking lock lever 17, a deviated weight is not applied and rotation of the rotary bush 14 becomes smooth. Consequently, the solenoid pin 15a will not be deviated.

In addition, even if the position pin 7 is engaged with the P range of the position plate 3, the solenoid 15 is not in the non-energized (deenergized state) state with the foot brake not operated.

Therefore, since the position of the recessed groove 14a does not coincide with the position of the position pin 7, the position pin 7 collides with the upper plane 14b of the rotary bush 14 and does not lower any more. Consequently, since the position pin 7 is deviated from the P range P, the movement from any one of the ranges R, N, D, S, and F other than the D range D cannot be carried out.

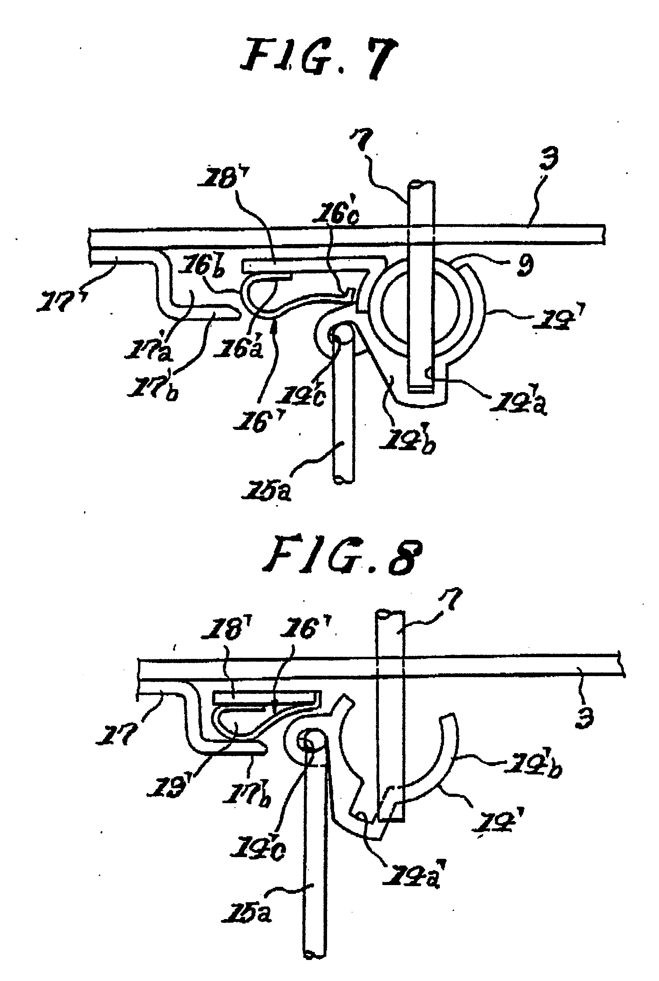

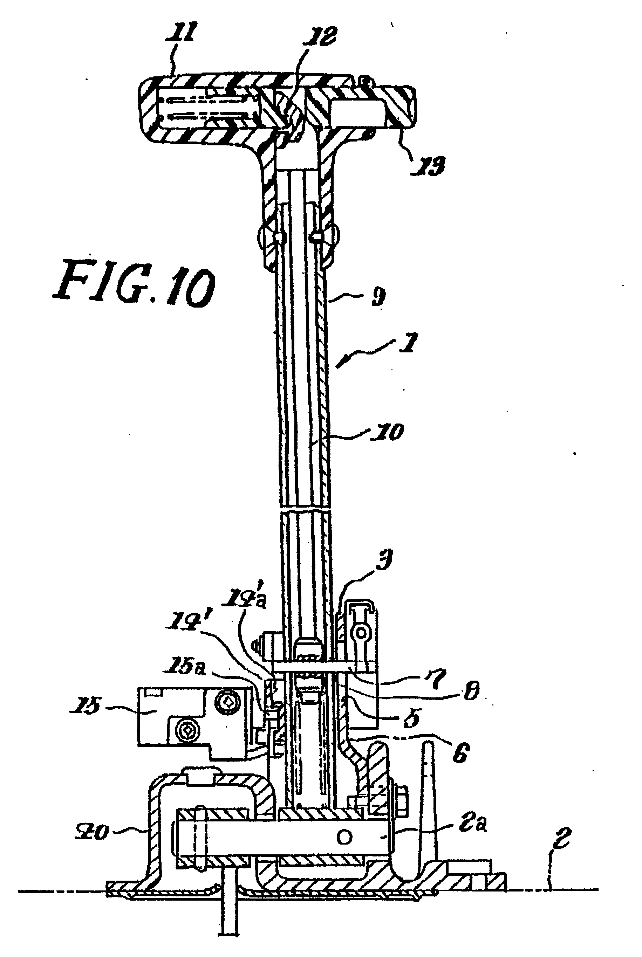

Figs. 7 to 10 show a second preferred embodiment of the A/T control device according to the present invention.

The same reference numerals as those shown in Figs. 1 to 6 designate substantially corresponding elements. The detailed explanations thereof will be omitted.

It is noted that the numeral 17' shown in Fig. 7 denotes a lock bracket 17' having a tongue piece 17'b via a gap 17a in the vicinity to the above-described P range P of the position plate 3.

The above-described solenoid 15 in the second preferred embodiment is constructed so that with the ignition switch 22 (shown in Fig. 6) turned to ON and the foot brake depressed, the power supply voltage is supplied to energize and the solenoid 15 is again turned to OFF after a constant time is elapsed.

When the solenoid is deenergized (OFF), the solenoid pin 15a is biased in the projection direction by means of the spring (not shown) when the solenoid is turned to OFF. When the recessed groove 14'a of the rotary bush 14' is fitted with the position pin 7 by means of a force stronger than the incorporated spring force when the solenoid pin 15a is turned to ON

A lock spring bracket 18' is disposed at the front side of the lever main body 9 along the position plate 3 and is disposed at a position narrowing the gap 17a of the lock bracket 17.

The lock spring 16' is disposed at a space between the above-described lock spring bracket 18' and rotary bush 14'.

One end 16'a of the lock spring 16' is welded and fixed to the lock spring bracket 18'. An inserting portion 16'b having a letter U shape of the horizontal cross section at the side of the lock bracket 17'.

The other end 16'c of the lock spring 16' is contacted with the rotary bush 14' under a pressure derived from the spring force stronger than the spring force within the solenoid 15.

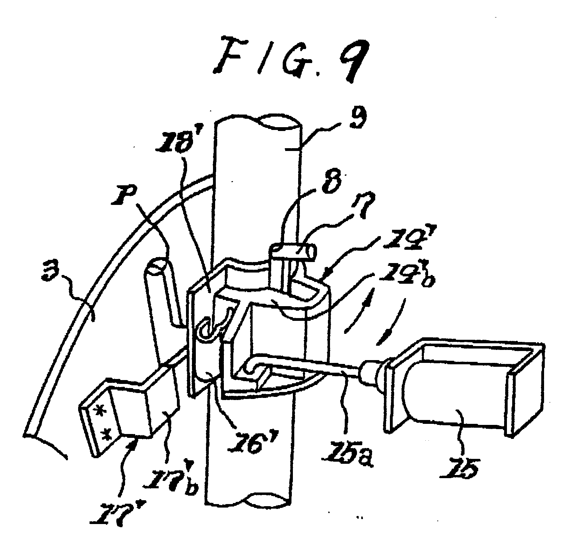

Since the dimension of the inserting portion 16'b is always wider than the gap 19' between the lock spring bracket 18' and lock bracket 17', the inserting portion 16'b of the lock spring 16 becomes largely flexed as shown in Fig. 8 and the other end 16'c is moved and separated from the rotary bush 14'. The rotary bush 14' is correspondingly pushed upward and rotated by means of the spring within the solenoid 15. Thus, the position of the position pin 7 does not align with the position of the recessed groove 14a.

As shown in Fig. 8, when the shift lever 1 is rotated through the position pin 7 at the position at which the P range P is engaged with the solenoid 15 turned to OFF. The solenoid pin 15a projected by means of the spring force within the solenoid 15 is pushed upward. When the inserting portion 16'b of the lock spring 16' is inserted in a space 19' under pressure between the lock bracket 17' and lock spring bracket 18', the other end 16'c is accordingly moved so as not to move the rotary bush 14'. Thus, since the rotary bush 14 receives only the pressure deviated from the solenoid 15, the position pin 7 and the position of the recessed groove 14a are consequently deviated from each other.

Therefore, even if the control button 13 is operated, the position pin 7 interferes with the upper plane 14b of the rotary bush 14 and does not move downward any more. Consequently, the position pin 7 is not moved out of the P range P.

When the shift lever 1 is rotated at a range position except the P range P and the solenoid 15 is turned to OFF, the rotary bush 14 is biased so as to rotate by means of the spring force of the lock spring 16' having the biasing force stronger than the force of spring located within the solenoid 15.

Therefore, the rotary bush 14' is held so that the position of the recessed groove 14a is placed at the position of the position pin 7 (refer to Fig. 7).

Next, when the shift lever 1 is pivoted until the position pin 7 is engaged with the P range P, the lock spring 16' is inserted into a gap 19' between the lock spring bracket 18' and lock bracket 17'.

Consequently, the other end 16'c is flexed. Since the pressure caused by the insertion of the lock spring 16' into the gap 19 is sufficiently strong, even if the solenoid is turned to OFF to hold the lock spring 16' in position. Since the other end 16'c of the lock spring 16 is flexed and is separated from the rotary bush 14', the rotary bush 14' is rotated via the solenoid pin 15a so that the position of the position pin 7 does not align with the position of the recessed groove 14a. In this state, even if the control button is operated, the position pin 7 interferes with the upper plane 14b of the rotary bush 14. Then, the position pin 7 is not moved from the P range P.

When in the above-described state the ignition switch 22 is turned to ON with the front brake depressed, the solenoid pin 15a of the solenoid 15 pulls the rotary bush 14 to be pulled against the spring force within the solenoid 15, the position of the recessed groove 14a of the rotary bush is again the same as the position of the position pin 7.

When the control button 13 is operated, the position pin 7 is moved downward into the recessed groove 14′a of the rotary bush 14′, the position plate 3 is moved out of the P range P. Therefore, the A/T control device is constructed so that it becomes possible to move th shift lever 1 into any one of the other ranges R, N, S, and F including the D range D.

It is noted that since the solenoid 15 is turned to OFF after a constant period of time is elapsed, no burden on the solenoid 15 is, thereby, imposed.

Hence, when the constant period of time is elapsed with no movement of the shift lever 1 from the P range P after the solenoid 15 is turned to ON, the solenoid 15 is again turned to OFF. In this state, the solenoid 15 will not be turned to ON unless the foot brake is again depressed.

Furthermore, when the position pin 7 of the shift lever 1 is placed at the R range R and first-speed range of the position plate 3, the A/T control device is automatically held in the shift lock OFF state since the position pin 7 always falls into the recessed groove 14a of the rotary bush 14.

As described hereinabove, the A/T control device according to the present invention includes: the shift lever pivotally supported on the vehicle body for the control over the A/T; and the position plate extended on the vehicle body and formed so as to restrict the range positions of the shift lever. The shift lever includes (1) the position pin engageable at the respective range positions of the position plate and biased so as to move upward and so as to be restricted at the corresponding range positions; (2) control means (including the control button) which can move the position pin downward so as to enable the position pin to disengage from the position plate; (3) the rotary bush rotatably supported on the peripheral surface of the shift lever, the rotary bush having the recessed groove which can move the position pin upward and downward only at a position of the recessed groove which aligns with the position pin and having the upper plane at which the movement of the position pin is blocked; (4) the solenoid energized only when the ignition switch is turned to ON and foot brake is depressed so that the rotary bush can be pivoted to cause the recessed groove of the rotary bush to align with the position pin and having the solenoid pin, the solenoid pin being linked to the rib of the rotary bush so that the rotary bush is rotated in the direction in which the position of the recessed groove is out of position of the position pin when either the ignition switch or foot brake is turned to OFF; and (5) the parking lock lever which biases the rib of the rotary bush so that the position of the recessed groove of the rotary bush always matches with the position of the position pin with a force stronger than the spring force housed in the inside of the solenoid and supported so that the position of the recessed groove of the rotary bush is deviated from the position of the position pin with the spring force of the solenoid when the lock lever interferes with the stopper, the shift lever being shifted at the parking range P, both solenoid pin and parking lock lever being positioned so as to substantially be the same in the horizontal direction with the rib of the rotary bush sandwiched. Therefore, the force blocking the movement of the position pin may resist only against the force pushing the control button. A duration of time for which the power is supplied to the solenoid can be shortened.

Furthermore, the weight on the rotary bush is not deflected. In addition, no deformation of the solenoid pin can be brought out.

In the second preferred embodiment, the lock spring bracket slightly separated from the position plate and disposed at the position from which it can be inserted into the gap of the lock bracket is included in the shift lever. In addition, the lock spring is disposed, the one end being supported on the lock spring bracket, the one end of the rotary bush being contacted under pressure with the other end thereof. When the shift lever is shifted at the parking range P with the solenoid turned to OFF, the other end of the lock spring is flexed by the insertion of the other end into the gap between the lock spring bracket and lock bracket. When the other end is separated from the rotary bush, the spring force within the solenoid causes the rotary bush to be rotated so that the position of the recessed groove does not align with the position of the position pin.

Consequently, the shift lever can always be held in the parking lock state even after the ignition key is removed from the ignition key switch. Even if the solenoid is turned to OFF with the position pin placed at any one of the ranges except the parking range, the shift lock state can be maintained so that the duration of time for which the power is supplied to the solenoid can be shortened.

It will fully be appreciated by those skilled in the art that the foregoing description is made in terms of the preferred embodiments and various changes and modifications may be made without departing from the scope of the present invention which is to be defined by the appended claims.

## Claims

1. A structure of an A/T control device for a vehicular transmission, comprising:

    a) a shift lever pivotally supported on a vehicle body for the control over the A/T; and

b) a position plate mounted on the vehicle body so as to restrict shift range positions of the shift lever:

the shift lever including:

c) a positioning pin which is engageable at respective shift range positions of the position plate and is biased upward so as to be restricted at the respective shift range positions;

d) control means for moving the positioning pin downward so that the engagement of the positioning pin from the position plate is released;

e) a rotary bush rotatably supported on the peripheral surface of the shift lever having the recessed groove which makes the upward and downward movement of the positioning pin possible only at a position thereof which aligns with the positioning pin and upper plate which blocks the movement of the positioning pin when the recessed groove is present at the position which does not align with the positioning pin; and

f) a solenoid which pivots the rotary bush so that the recessed groove of the rotary bush aligns with the pisitioning pin when energized and which pivots the rotary bush so that the recessed groove of the rotary bush does not align with the positioning pin when deenergized.

2. The structure of the A/T control device as set forth in claim 1, wherein the solenoid is energized when an ignition switch is turned to ON and a vehicular brake system is operated and deenergized when either the ignition switch or the brake system is not operated.

3. The structure of the A/T control device as set forth in claim 2, wherein a solenoid pin of the solenoid is linked to a rib of the rotary bush.

4. The structure of the A/T control device as set forth in claim 3, wherein the shift lever includes: a parking lock lever which biases the rib of the rotary bush to rotate so that, with a force stronger than a spring force housed in the inside of the solenoid, the position of the recessed groove of the rotary bush aligns with the position of the position pin and which is supported so that when the shift lever is shifted at the parking range and it interferes with a stopper fixed on the vehicle body so as to separate from the rotary bush, thus the spring force of the solenoid causing the position of the recessed groove to be deviated from the position of the position pin, both solenoid pin and parking lock lever being positioned so as to be the same level in the horizontal direction with the rib of the rotary bush sandwiched.

5. The structure of the A/T control device as set forth in claim 3, wherein the shift lever includes: a lock bracket placed in the vicinity to a parking range of the position plate and having a tongue piece separated with the gap from the position plate and a lock spring bracket slightly separated from the position plate and disposed at as position insertable into a gap of the lock bracket.

6. The structure of the A/T control device as set forth in claim 5, wherein the shift lever includes a lock spring, one end thereof being supported on the lock spring bracket and the other end being contacted with one end of the rotary bush, the other end thereof being flexed when inserted into a gap between the lock spring bracket and lock bracket when the solenoid is turned to OFF and the shift lever is shifted at the parking range, the spring force of the solenoid causing the rotary bush to be rotated so as not to match with the position of the recessed groove.

7. The structure of the A/T control device as set forth in claim 1, wherein the control means comprises: a hollow lever main body formed with an elongated hole so so to enable upward and downward movement of the positioning pin; a rod supported so as to enable upward and downward movement within the lever main body; and a control button installed within a knob supported at the upper end portion of the lever main body, movable substantially in the horizontal direction with a taper portion of an upper end of the rod contacted therewith, and moving the positioning pin downward so as to disengage the positioning pin from the position plate.

8. A structure of an A/T control device for a vehicular transmission, comprising:

a) a shift lever pivotally supported on a vehicle body for the control over the A/T; and

b) a position plate mounted on the vehicle body so as to restrict shift range positions of the shift lever:

c) first means which is engageable at respective shift range positions of the position plate and is biased upward so as to be restricted at the respective shift range positions;

d) second means for moving the positioning pin downward so that the engagement of the first means from the position plate is released;

e) third means, rotatably supported on the peripheral surface of the shift lever, having a first member for making the upward and downward movement of the positioning pin possible only at a position thereof which coincides with the position pin and a second member for blocking the movement of the positioning pin when the first member is present at the position which does not align with the positioning pin; and

f) a solenoid member for pivoting the rotary bush so that the first member of the third means aligns with the pisitioning pin when energized and for pivoting the third means so that the first member of the third means does not align with the positioning pin when deenergized, the solenoid member being deenergized for a predetermined time after an ignition switch of the vehicle is turned to ON and vehicular brake mechanism is operated.

# FIG. 1

FIG. 2

# FIG. 3

# FIG.4

# FIG.5

# FIG. 6

# FIG. 7

# FIG. 8

FIG. 9

FIG.10